# EUROPEAN PATENT APPLICATION

(11) **EP 3 572 934 A1**
(43) Date of publication of application: **27.11.2019**
(21) Application number: 18173983.0
(22) Date of filing: 24.05.2018
(51) Int. Cl.: G06F 9/4401, G06F 9/455, G06F 21/53, G06F 12/14

(54) **METHOD FOR STARTING AN OPERATING SYSTEM**

(71) Applicant: Visteon Global Technologies, Inc., Van Buren Township, MI 48111-5711 (US)
(72) Inventor: Hupfer, Michael, 76337 Waldbronn (DE); Ahmed, Waheed, 76744 Wörth am Rhein (DE)
(74) Representative: MERH-IP Matias Erny Reichl Hoffmann Patentanwälte PartG mbB

(57) **Abstract**

A method for starting an operating system, whereby the time needed to start the operating system may be reduced. A processor (2) starts command execution (9) of the instructions contained in a memory image prior to the complete transfer of the memory image. Before a data transfer (7) completes the transfer of the memory image to a working memory of the data processing system, the processor starts command execution (9) of the instructions contained in the memory image.

## Description

### 1. Field

Embodiments herein generally relate to a method for starting an operating system, whereby upon starting the operating system in a data processing system, a memory image of a bootable storage medium is transferred to a working memory of the data processing system during a transfer of data, and whereby the instructions contained in this memory image are processed by a processor of the data processing system.

### 2. Related Art

An embedded system may be an electronic computer, processor or a computer that is integrated or embedded in a technical context, such as within a motor vehicle, a medical device, a consumer electronic device, a household appliance, or aircraft. It is becoming increasingly important to improve embedded systems to achieve better performance. For example, in a motor vehicle, there is a need to improve an embedded system, such as an electronic control unit (ECU) or other control devices, by reducing the time between turning on an operating system of the embedded system and start-up of the operating system, also referred to as "boot time," to achieve full functionality of the operating system as quickly as possible. This need at least exists because of safety and user experience goals. For example, if the vehicle includes an embedded camera system, such as a surround-view camera or rear-view camera, safety and user experience goals make it desirable to achieve full functionality of the embedded camera system as quickly as possible after turning on or starting up the vehicle. Otherwise, a user of the vehicle may not utilize the embedded camera system, which could impact safety and user experience. In the vehicle context, one factor that makes satisfying this need challenging is the high number of embedded systems, which are entrusted to store and run numerous applications and programmes. Furthermore, the type and quantities of the data associated with the embedded systems, such as HD image data, make satisfying the need challenging. Additionally, because some embedded systems may require updating, such as software updating, scheduling the updates and the effects from the updates may impact the need.

In a conventional system, a memory image is transferred completely from a memory element into a working memory of the system and then executed. Based on this approach, a processor in the system is required to wait until the transfer of the memory image is complete, before the processor can start to execute the instructions. This delay comprises a significant portion of the boot time.

### SUMMARY

One or more embodiments describe a method for starting an operating system whereby the time needed to start the operating system (i.e., boot time) may be reduced. This may be through a fast loading / boot process (instant boot) featured on a control device, which contains the operating system. The control device may be an embedded system located within a vehicle. Through instant boot, the loading and execution steps for a memory image may occur in parallel in order to avoid idle or waiting time. A processor of the control device is able to remain active, which thus avoids idle or waiting time. A privileged hypervisor processor mode may interleave loading steps and execution steps, whereby the processor (CPU) passes into the privileged hypervisor processor mode upon attaining a pre-configured condition. Furthermore, a memory protection is used in a virtual environment together with interrupt handling capabilities. This permits data blocks (chunks) that are limited in size to be loaded. For example, such chunks may be between 16B and 32kB in size.

One or more embodiments may divide the memory image into at least two parts (i.e., create at least two memory images). Instead of loading the entire memory image from start to completion, the division allows critical applications (i.e., those that need to be loaded at the beginning) to be grouped in a small first memory image and the remainder to be grouped in one or more additional memory images. Through this grouping, the critical applications can be prioritized before the remainder. Thus, the critical applications may be loaded first. Moreover, if needed, at a later point, the remainder (or a portion thereof) may be loaded. The remainder may be stored in a large memory image, which may be greater in size than the small memory image. Through this division approach, the boot-time may be reduced, for time may not be spent on loading non-critical applications.

One or more embodiments may place or store the applications that need to start first in a small kernel image. The small kernel image is loaded first. All other software is placed in a file system, which may be loaded at some point-if needed-after the small kernel image is loaded.

Additional details and benefits of one or more embodiments may be found in the following description, with reference to the drawings associated therewith.

### BRIEF DESCRIPTION OF THE DRAWINGS

- **Fig. 1:**: A conventional example of a booting schema;
- **Fig. 2:**: Another conventional example of a booting schema;
- **Fig. 3:**: A booting scheme according to one or more embodiments;
- **Fig. 4:**: A detailed booting scheme according to one or more embodiments;
- **Fig. 5:**: A memory area with different access privileges according to one or more embodiments;
- **Fig. 6:**: A memory area with different access privileges that is modified during the process sequence according to one or more embodiments;
- **Fig. 7:**: A process diagram of the method for starting an operating system according to one or more embodiments; and
- **Fig. 8:**: A flowchart of the method for starting an operating system according to one or more embodiments.

### DETAILED DESCRIPTION

In a conventional system, for example a conventional embedded system, when starting an operating system, a memory image must be transferred completely from a persistent memory and/or bootable storage medium 1 (boot medium) into a working memory, before a processor may run the instructions and/or commands contained in the memory image. As a result, the processor 2 must wait until the transfer of the memory image is complete. Only after completion may the processor start to execute the instructions and/or commands of the memory image. This delay comprises a significant portion of the boot time (i.e., time between turning on the operating system and start-up of the operating system).

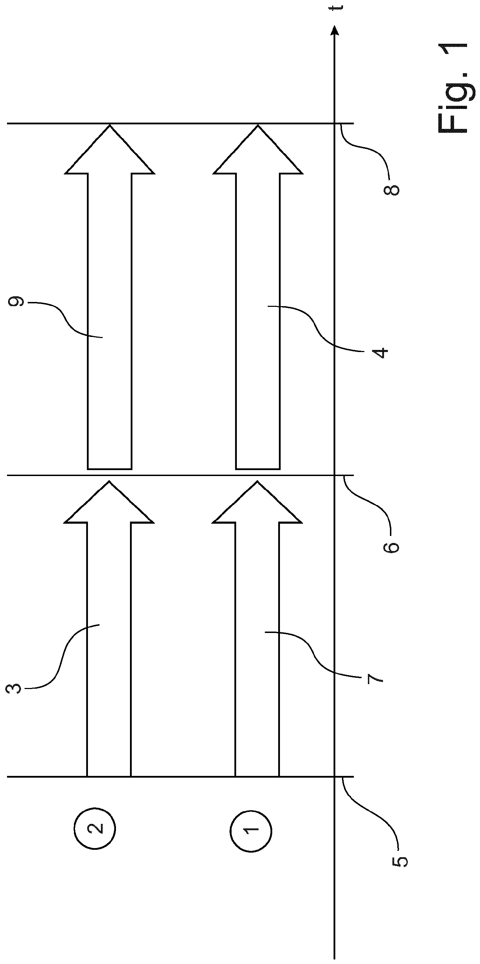

**Figure 1** depicts a conventional example of a booting schema. As depicted in **figure 1****,** there are two idle periods 3 and 4. In a time segment that covers the moment when the system is turned on 5 until the time "transfer end" 6, the bootable storage medium 1 is active and data transfer 7 to the system's working memory is under way. During this first phase, the processor 2 is waiting for data transfer to be complete during the first idle period 3.

During a second time segment that covers the period between "transfer end" 6 and the end of operating system start 8, the processor 2 is actively command processing 9 while the bootable storage medium 1 is in the second idle period 4.

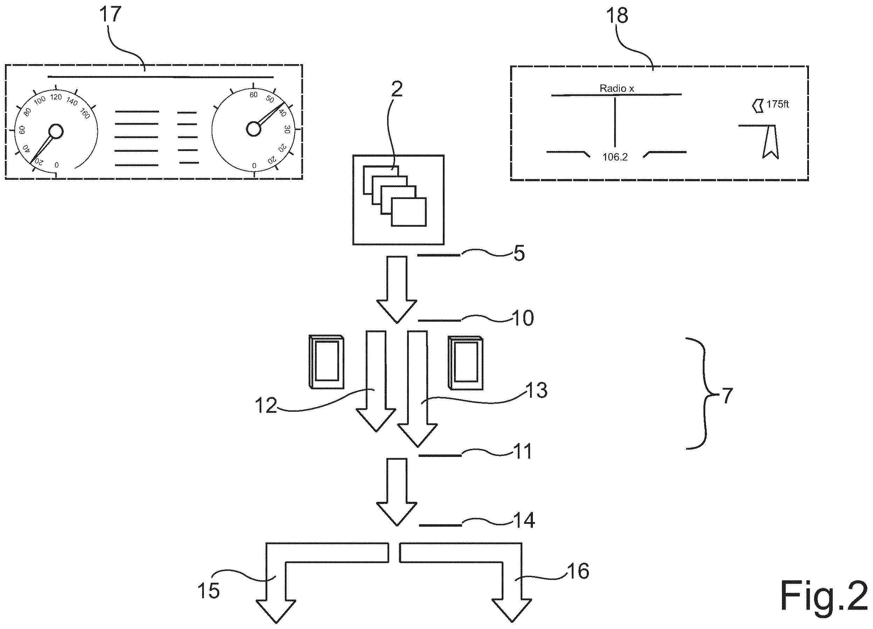

**Figure 2** depicts another conventional example of a booting schema. A fundamental system initialization is performed after starting 5 the system. Upon completion, at the point start loading 10, loading, for example of a first operating system 12 and simultaneously a second operating system 13 and the so-called hypervisor is started. These loading processes may run sequentially or in parallel.

The processor 2 that is designed in figure 2 as a one-chip system or System-on-Chip (SoC) queries the end of the loading process 11 of one or more memory images in this phase. Upon reaching the end 11 of one or more loading processes, the hypervisor partitions the system whereby resources like CPUs, memory areas and peripheral devices are assigned to domains. A so-called domain set-up 14 is then started. A first domain 15 and a second domain 16 are started and run in parallel. In one example, the first domain 15 may contain the functionality of a driving information system 17 (DI) and the second domain 16 may contain the functionality of an infotainment system 18 which is also described as an "in vehicle infotainment system" or "IVI". One potential representation of a driver information system 17 (DI) is shown as an example in figure 2 upper left and comprises at least one speedometer and one rev counter. A potential representation of an infotainment system 18 is shown as an example in figure 2 upper right. This representation shows information from a tuner and a navigation system. Figure 2 also shows the time segment required for data transfer 7 via a curly bracket in which the processor 2 is waiting for the end of the data transfer 7 in the first idle period 3.

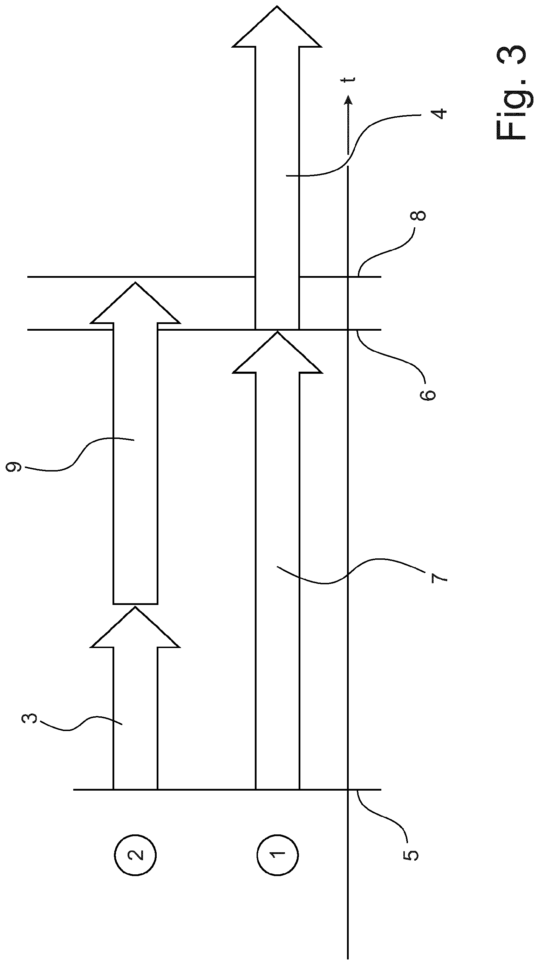

**Figure 3** depicts a booting schema for a method to start an operating system, which is in accordance with one or more embodiments. The schema, as shown in **Figure 3****,** quickens system start-up by reducing the duration of the first idle period 3 and/or the second idle period 4.

The processor 2 begins to execute the instructions contained in the memory image, i.e. command execution 9, not first following the complete loading of the memory image at the end of the transfer 6, but rather during the time in which the memory image is being loaded from the bootable storage medium 1 during data transfer 7. As a result of the earlier start of command execution 9, the end of the operating system start 8 is reached earlier and the time for starting the operating system is reduced.

In addition, actions are planned in order to, for example in the case that instructions that the processor 2 wants to execute during command processing 9 have not yet been loaded, branch program execution into corresponding processing steps and/or fault routines. These actions are explained in greater detail below.

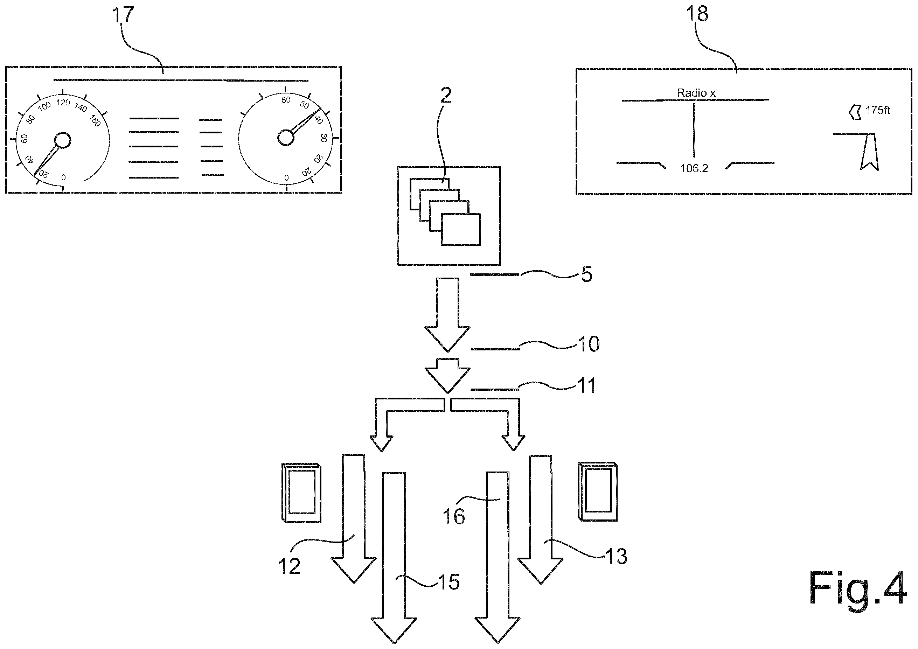

**Figure 4** shows a detailed booting schema, which is in accordance with one or more embodiments. A fundamental system initialization is performed after starting 5 the system. Upon completion, the hypervisor is loaded at the point start loading process 10. The functions of the hypervisor include, for example, setting up domains and specifying and/or granting access rights for these domains. These functions can be executed by the hypervisor following a very brief loading period at the end of the loading process 11. Compared to an operating system, the hypervisor is much smaller in size. As such, compared to a conventional approach of having to load the entire operating system, loading the hypervisor is quicker. As such, in **Figure 4****,** the idle period for the processor 2 is significantly reduced.

In **Figure 4****,** the memory image of a first operating system 12 is loaded and in parallel, for example, a second operating system 13 and, the execution of the first-loaded instructions of the first and of the second operating system 12 and 13 is started. This execution of the instructions of the operating systems 12 and 13 may, for example, take place in two different processor cores of a multi-core processor or a System-on-Chip (SoC).

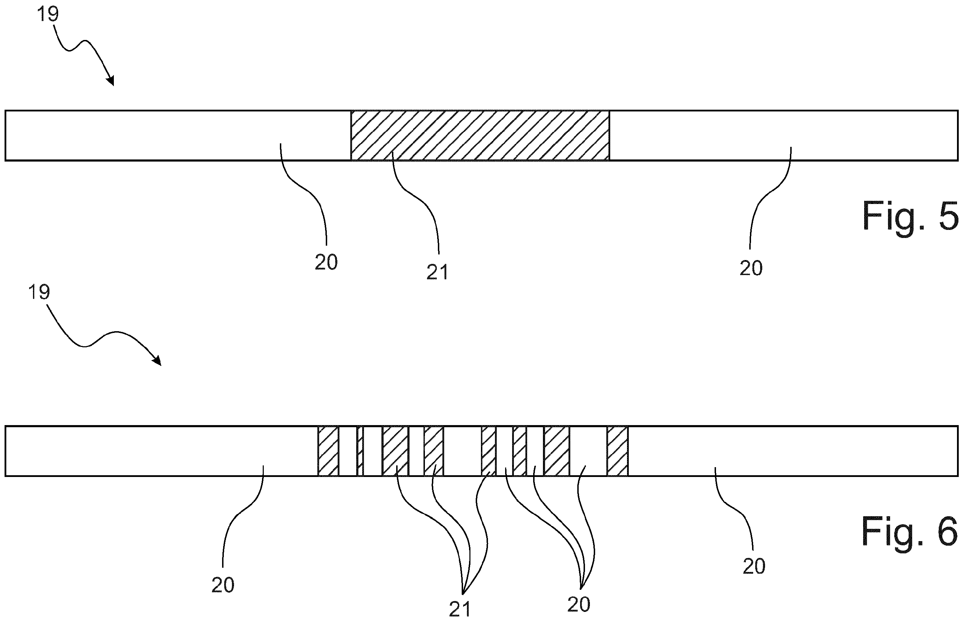

In order to realise this early execution of instructions before the associated memory image has been fully loaded, a privileged hypervisor processor mode may interleave loading and execution steps. This may provide access rights to the memory or memory area of a domain controlled by the hypervisor. These access rights, controlled by the hypervisor, apply to less-privileged modes, i.e., these modes have lower rights than the hypervisor / hypervisor mode. For the method for starting an operating system, access is granted, in general, with the exception of the memory areas to which the operating system will be loaded to. Access to a memory area without sufficient rights causes an "fault" that causes processor 2 to execute a fault handler. The fault handling routine that is now to be executed is executed in hypervisor mode having a priority such that the fault handler is able interrupt the execution of the operating system. **Figure 5** depicts an example of such an allocation of access rights to memory areas, which is in accordance with one or more embodiments. The fault handler loads the part of the memory image or operating system image that covers the fault causing address with high priority. Next, access to this memory area or memory block is granted and upon completion of the fault handling routine, the instruction which caused the fault handling is executed again, this time successfully.

A "normal" data transfer is set up in order to permit execution and loading to run in parallel. In this context, the OS image is loaded sequentially, block by block, into the RAM and the access rights are updated accordingly. If a fault occurs, the regular transfer is paused and the block that is currently required is loaded. Next, the regular transfer of the memory image is continued, the fault handler is exited, and the processor 2 continues to execute the instructions for the operating system contained in the memory image. This process ends when the memory image for the operating system has been completely loaded and the instructions to start the operating system have been executed in full.

The process sequence will be described in more detail below using an exemplary embodiment, whereby the method to start an operating system is also referred to as a "SmartBoot". As an aid to comprehension, some of the terms and relationships used in the description will be explained below.

A "SoC" is a "System on a Chip" and usually denominates the piece of the hardware that was called "CPU" 2 formerly. But in contrast to a CPU 2 a SoC contains multiple CPUs 2, a set of peripherals like USB controllers and UARTS, graphics modules, sound modules, GPU's, RAM, and lot of more modules. These are all connected by a fabric, making out of all the components a "system".

Virtualization of a SoC means to control access to resources by software.

Resources can be limited or shared by the controlling software, which is called "hypervisor" 22. E.g. access to RAM is usually restricted, while CPU 2 are shared. It is possible to have more virtual CPUs 2 than physical ones.

SoCs which support virtualization are able to protect the system's resources, like CPUs 2, memory and peripherals, by hypervisor 22. The hypervisor 22 runs in a certain privilege level that enables it to install protection mechanisms that cannot be changed by software running in lower privilege levels. This subset or resources is called "virtual environment" or "virtual machine". Virtual machines are often called "guests".

Virtualization enables a CPU 2 to host multiple operating systems at the same time. This cannot be achieved without protecting the memory, because every operating system assumes to have full access to all available memory in the system. By means of a MMU (Memory Protection Unit), the system's RAM can be partitioned. This may be done by assigning each guest a big chunk of memory. Each guest believes that this chunk of memory is the complete memory available in the system. If a guest tries to access RAM which is assigned to another guest, the CPU 2 will take an exception (aka 'fault, 'abort'), which usually causes the guest to crash because it believes in a hardware fault. One or more embodiments take advantage of this fact. Finally, the memory can be partitioned per privilege level. Thus, for an operating system, the memory partitioning can differ from the hypervisor's 22.

Memory is organized in chunks. Each chunk is called "page" and usually 0x1000 = 4096 Bytes big. Memory protection works with page granularity.

Memory protection may be achieved by use of a MMU (memory management unit). MMU may translate a virtual address into a physical address (which in practice addresses memory or peripherals). So, every process is linked to the same virtual address range, believing that there is the full range of 32 or 64-bit address space available. Under the hood, the MMU translates these virtual addresses into physical ones, which are of course different for each process. This 1st stage of translation may be set up by the operating system and cannot be changed by the user's applications.

Through virtualization, a 2nd stage of translation may separate multiple operating systems from each other, keeping the 1st stage still in place. Now the operating systems believe too that they have all the memory in the system available for their exclusive use, but in truth they are operating on intermediate addresses which are translated into physical ones by the 2nd stage translation of the MMU. So, for example, it is possible to run 2 operating systems on the same SoC, each linked to 0x80000000, without one knowing of the other. For a user process the translation scheme is virtual address -> intermediate address -> physical address. The set-up of the translation is controlled by the hypervisor 22 and cannot be changed by the operating systems.

SmartBoot loads and boots the image in parallel. In a non-virtual environment this is at least unstable and may not be possible, since execution progress and image loading compete with each other. Additionally, the image execution is not strictly sequential: the CPU 2 will jump back and forth. It will happen that the CPU 2 tries to execute parts of the image which are not loaded yet, resulting in a crash. To enable parallelism, a mechanism to handle these situations may be required. This mechanism may be the 2nd stage translation.

In a virtual environment, the 2nd stage of translation may be configured in a way to control critical situations, such as avoiding the CPU 2 to crash and allowing the image to be loaded and executed in parallel.

The hypervisor 22 partitions 19 the memory for a guest 20 and sets privilege level. The hypervisor 22 allows access to the complete memory except for the address range 21 in which the operating system's image resides.

Then the hypervisor 22 hands over control to the operating system. That means, the hypervisor 22 switches to a lower privilege level and tells the CPU 2 to execute from an address within the image area ('entry point'). The CPU 2 will try to fetch instructions from the entry point. That causes an exception since the memory configuration is programmed to deny access to this address in this privilege level. The exception is caught by the hypervisor 22, reacting in a more useful way than simply crashing the OS: The hypervisor 22 loads a certain piece of memory which covers the faulting address with the missing image data from the boot medium, but only the part which covers the mentioned piece of memory. This could be a couple of pages, e.g., which typically is around 16kB or 32kB.

For loading, the hypervisor 22 first has to:
- detect the faulting address from some CPU 2 registers
- calculate which part of the image would have been in the relevant memory area if the image had been loaded completely before booting. This calculation can be trivial (just adjusting an offset) or more complex if a file system is involved.

The hypervisor 22 is able to access the complete memory, including the image area, when hypervisor 22 is running with higher privileges. Due to these privileges, hypervisor 22 can also access the boot medium controller and catch interrupts fired by this controller.

These privileges enable the hypervisor 22 to initiate a data transfer from the boot medium into the relevant memory area and to wait for completion. After data transmission, hypervisor 22 changes the memory configuration in a way that this certain area is now accessible for the guest, and returns from the exception.

The CPU 2 switches to a lower privilege level and tries to fetch instructions starting with the entry point. This time the access succeeds and the CPU 2 is able to execute the code which was loaded in reaction to the memory fault. When the execution flow hits addresses which are not loaded yet, another exception happens and the procedure repeats. The process will end up in a memory configuration like **figure 6****,** which is in accordance with one or more embodiments.

A guest operating system may be configured such that less than all of a memory image is loaded during boot time-i.e., time between powering-on to start-up of the guest operating system. For example, portions of the image that are not critical to starting-up the operating system may not be loaded during the boot time. Those non-critical portions may not be called during the boot time. One or more embodiments may, nevertheless, utilize the idle period associated with the boot medium to load one or more non-critical portions of the image of the guest operating system. To do so, two restrictions may be considered: First, these transfers may be interruptible so that, in case of a fault, the required page can be loaded nearly immediately. Second, it is often not possible to poll for the end of a transmission. Polling means to check a certain bit in a certain hardware register of the boot medium's controller, until the bit changed its state in order to indicate the end of transmission. It may not be possible because the CPU may be too busy booting up the guest operation system (or at least the critical portions thereof). In regards to the first restriction, one approach is to load chunks of data, which are limited in size. In regards to the second restriction, one approach is to use interrupts. Interrupts can be fired by the boot medium's controller when a transfer finishes. Resource protection by virtualization covers interrupts, too. That means that an interrupt can be received by the hypervisor 22, although the interrupt is masked by the guests. So, if an interrupt occurs, the execution of the guest operating system can be interrupted to handle the end of transmission, regardless of which guests are hosted and how they handle interrupts.

As such, the SmartBoot algorithm may include the following steps: After loading of the first chunk of data, which was caused by trying to fetch instructions from the entry point, another data transfer is triggered. But the CPU 2 does not wait for the end of this transfer. The CPU 2 rather boots the operating system. When the transfer is finished, an interrupt is taken by the CPU 2. The recently loaded chunk of data is incorporated into the guest's memory protection configuration, another transfer is started and the execution of the operating system code continued. In case of a fault, the CPU 2 waits until the current running data transfer is finished. The affected memory area is added to the memory protection configuration. Afterwards the fault handling explained above is done. Finally, another transfer is started and the boot process resumed. This process may be repeated until the complete image is loaded.

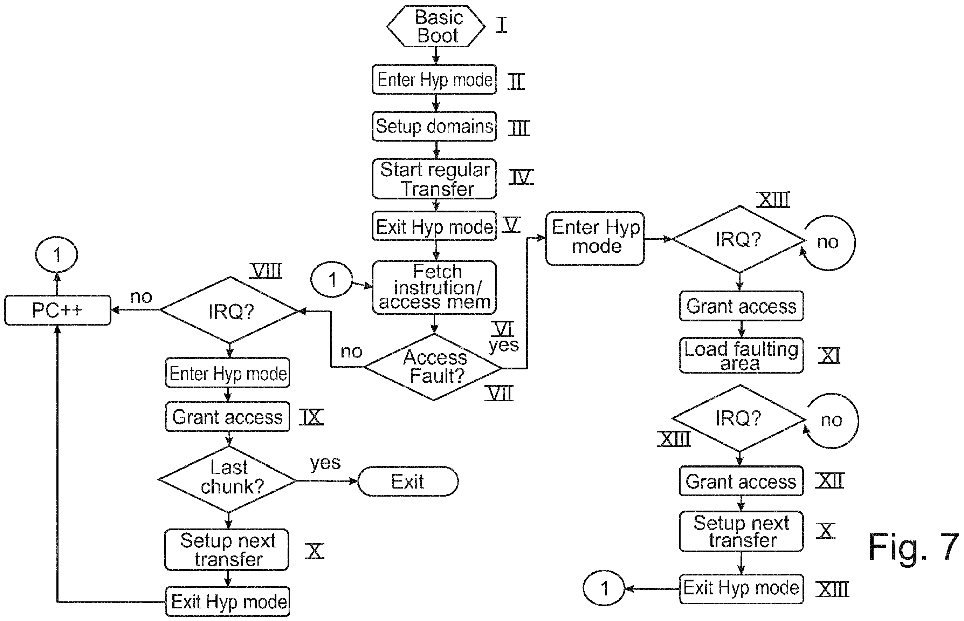

An example of such a process of the method for starting an operating system based on a domain is depicted as a flowchart **figure 7****,** which is in accordance with one or more embodiments.
I. Initializing RAM memory, PIN muxing, clock generator, etc.
II. Activating hypervisor mode with special authorisations.
III. Partitioning memory, set up memory access rights, assign the CPUs 2.Access to the memory area in which the operating system image is loaded is refused.
IV. Start a first part of the operating system image.
V. Leave the highly-privileged mode and jump to the entry point of the operating system. The operating system is run in an area with lower privileges.
VI. The CPU 2 executes commands which means either instruction fetch or data access or both.
VII. Examination of whether accessing commands or memory access caused a fault.
VIII. Examination of whether the end of the transfer has been reached as indicated by an interrupt (end of transfer interrupt). This interrupt occurs once loading a data block (chunk) has ended. If the interrupt (end of transfer interrupt) has not yet been displaced, a loop is executed until the interrupt has been received.
IX. Assignment of access authorization for the lower privileged mode to the memory area that was loaded by means of the preceding transfer
X. Start of a transfer for the next data block (chunk) that is in line.
XI. Load a part or data block of the operating system image from the boot medium.
XII. Assignment of access authorization for the lower privileged mode for the memory area that was loaded by means of the preceding step.
XIII. End of hypervisor mode. Causes the instruction that caused the fault to be executed again.

One or more embodiments results in a decrease of a boot time of an embedded system, which may be in a motor vehicle. In the motor vehicle environment, having short boot times is desirable and often needed, such as through codified requirements/mandates. For example, it is desirable to have early functionality for tell tales, warning sounds, rear-view cameras, etc. One or more embodiments may achieve this early functionality in under 1-second, such as on or under 0.9-second. This may mean that one or more embodiments has a boot-time of under 1-second, such as on or under 0.9 seconds, for an embedded system of a motor vehicle.

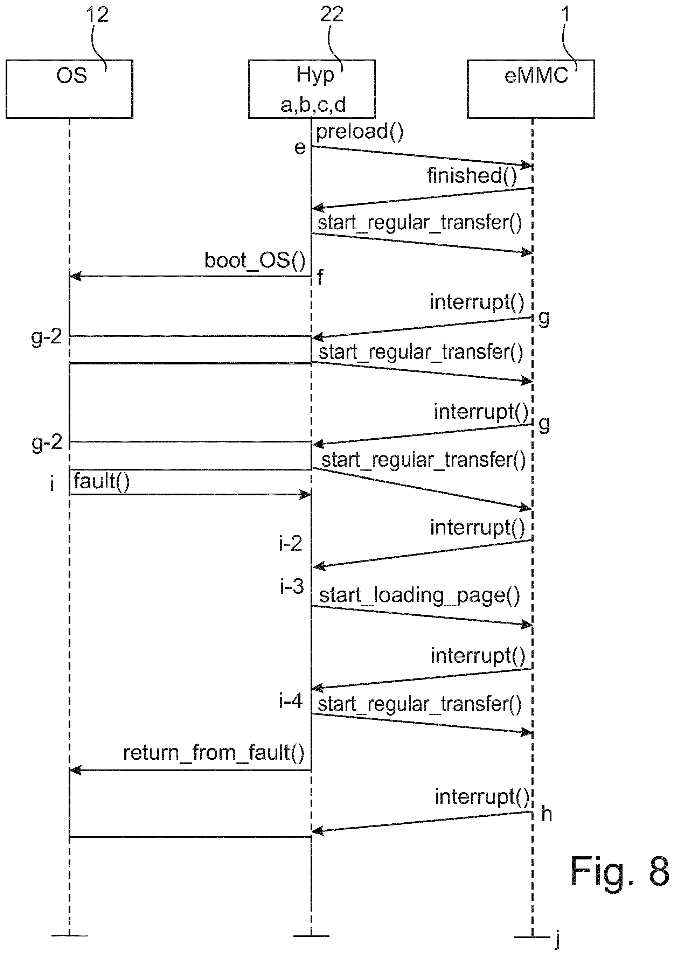

One or more embodiments may utilize one or more of the following steps to improve an embedded system by reducing a boot time of the embedded system. Figure 8 shows a flowchart of the method for starting an operating system according to one or more embodiments:
a) The hypervisor (HYP) receives some configuration information. This information includes the boot medium, DMA channel number, start and size of the assigned memory, start and size of the OS image and start and size of a pre-load area.
b) HYP sets up the 2^{nd} stage of translation in a way that the complete assigned memory is mapped except the OS image range.
c) HYP install traps that protect the boot medium and the DMA channel from being accessed by the OS.
d) HYP enables interrupt routing to HYP mode.
e) HYP loads a memory range specified as pre-load area and adds it to the translation. It starts the transfer of the page immediately following the pre-load area. The pre-load area typically starts at the first address of the OS image and includes the entry point of the OS.
f) HYP hands over control to the OS.
g) While the OS is executing, transferring of pages finishes. An interrupt happens, which is taken to HYP. That means, that the regular execution flow of the OS is broken. HYP adds the loaded page to the translation and triggers loading the next one (g-2). The execution of the OS is resumed.
h) That procedure repeats until the complete image is loaded.
i) If the OS hits a page which is not currently loaded, a page fault is generated and taken to HYP. This breaks again the execution flow of the OS. HYP waits until the current regular transfer finishes (i-2), adds it to the translation. Now the faulting page is loaded and added (i-3). Finally, the next regular page transfer is triggered and the execution of the OS resumed (i-4).
j) If image loading is completed, the protection mechanisms are removed and the related drivers are signalled that all resources are available for the OS now.

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention. Furthermore, the embodiments of the present invention generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation desired. It is recognized that any circuit or other electrical device disclosed herein may include any number of microcontrollers, processors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform any operation(s) disclosed herein. In addition, any one or more of the electrical devices may be configured to execute a computer-program that is embodied in a non-transitory computer readable medium that is programmed to perform any number of the functions as disclosed. While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### REFERENCE NUMERAL INDEX

- 1: Bootable storage medium (boot medium)
- 2: Processor (CPU)
- 3: First idle period
- 4: Second idle period
- 5: Turn on (power on)
- 6: Transfer end (transfer finished)
- 7: Data transfer (transferring)
- 8: End of operating system start-up (booting finished)
- 9: Fault handling
- 10: Start loading process
- 11: End loading process
- 12: First operating system
- 13: Second operating system
- 14: Start domain set-up
- 15: First domain
- 16: Second domain
- 17: Driver information system (DI driver information)
- 18: Infotainment system (IVI in-vehicle infotainment)
- 19: Partition (partition)
- 20: Address area with authorization "guest"
- 21: Address area with authorization "no access"
- 22: Hypervisor

## Claims

1. Method for starting an operating system whereby upon starting an operating system in a data processing system a memory image of a bootable storage medium (1) (boot medium) is transferred to a working memory of the data processing system during a transfer of data (7) and whereby the instructions contained in this memory image are processed by a processor (2) of the data processing system during a command execution process (9), wherein the processor (2) starts the command execution process (9) for the instructions contained in the memory image before a complete transfer of the memory image by the data transfer (7) to the working memory of the data processing system is completed.

2. Method according to claim 1, wherein a memory image of a hypervisor (22) that contains configuration information is loaded prior to the start of command execution (9) by the processor (2) of the instructions contained in the memory image.

3. Method according to claim 2, wherein the configuration information contains at the least information about the bootable storage medium (1), a DMA channel number, information about a starting area and a size of an assigned memory, information about a starting area and a size of a memory image of the operating system to be started as well as information about a starting area and a size of a pre-load area.

4. Method according to one of claims 1 to 3, wherein in order to execute the instructions contained in the memory image, the processor (2) is operated in a privileged hypervision processor mode which permits the interleaving of intended loading and execution steps.

5. Method according to one of claims 1 to 4, wherein a first and a second memory image of a bootable storage medium (1) are transferred in parallel into the working memory of the data processing system and that command execution (9) of the instructions contained in the first memory image by a first processor (2) and command execution (9) of the instructions contained in the second memory image by a first processor (2) are started before the memory images have been completely transferred to the working memory.
